# EUROPÄISCHE PATENTSCHRIFT

(11) **EP 3 892 353 B1**
(45) Veröffentlichungstag und Bekanntmachung des Hinweises auf die Patenterteilung: **30.11.2022**
(21) Anmeldenummer: 21164606.2
(22) Anmeldetag: 24.03.2021
(51) Int. Cl.: B01D 46/00, B01D 46/10

(54) **FILTERVORRICHTUNG**
FILTER DEVICE
ELEMENTES FILTRANT

(30) Priorität: 09.04.2020 DE 102020110081
(43) Veröffentlichungstag der Anmeldung: 13.10.2021
(73) Patentinhaber: Lufttechnik Gransee GmbH, 16775 Gransee (DE); Oerlikon Textile GmbH & Co. KG, 42897 Remscheid (DE)
(72) Erfinder: RICKERTS, Stephan, 26623 Großenaspe (DE); CLAUßEN, Ernst, 24888 Steinfeld (DE); PETERSEN, Hauke, 23845 Oering (DE); KNÖDLER, Frank, 24582 Brügge (DE); DITTSCHER, Sonja, 24610 Trappenkamp (DE)
(74) Vertreter: Dantz, Jan Henning

(56) Entgegenhaltungen:
- EP-A2- 0 099 212
- CN-A- 107 913 551
- DE-A1- 2 754 513
- DE-U1-202016 001 034
- US-A- 3 354 616
- US-A- 5 837 040
- US-A1- 2011 277 441
- US-B1- 6 248 237

## Beschreibung

Die vorliegende Erfindung betrifft eine Filtervorrichtung zum Filtern von Partikeln nach dem Oberbegriff des Anspruches 1.

Zum Reinigen eines Luftstromes sind Trommelfilter bekannt, bei denen eine Oberfläche des Trommelfilters über eine Saugdüse gereinigt wird, wie dies aus der DE 28 02 369 A1 bekannt ist. Eine solche Reinigung während des Produktionsprozesses in kontinuierlichem Betrieb ist allerdings für feinere Partikel nur schlecht geeignet.

Die DE 91 01 692 U1 offenbart eine Filtereinrichtung in einem Luftkanalsystem, das auswechselbar ist. Zum Auswechseln wird die Filtervorrichtung mit dem Filterelement vollständig aus der Filtereinrichtung entnommen und einem Reinigungsprozess zugeführt. Der Nachteil bei einer derartigen Filtervorrichtung besteht jedoch darin, dass der Produktionsprozess zum Wechsel der Filterelemente unterbrochen werden muss.

DE 27 54 513 offenbart eine Dichtungsvorrichtung für Filterzellen, bei der zur Entnahme einer gebrauchten Filterzelle Zugangstüren entfernt werden und jeweils ein Polyethylensack um einen Flansch angeordnet wird, so dass die Filterzelle gegriffen und entnommen werden kann. Die Zugangstüren sind über Muttern und Gewinde festlegbar.

Es ist daher Aufgabe der vorliegenden Erfindung, eine Filtervorrichtung zum Filtern von Partikeln aus einem Luftstrom zu schaffen, die ein Auswechseln eines Filterelementes ohne Prozessunterbrechung ermöglicht und einfach zu bedienen ist.

Diese Aufgabe wird mit einer Filtervorrichtung mit den Merkmalen des Anspruches 1 gelöst.

Die erfindungsgemäße Filtervorrichtung weist eine durch eine Tür verschließbare Einsteckkammer, von der ein Filterelement zu dem Strömungskanal zuführbar ist, und eine durch ein Verschlusselement verschließbare Ausgabekammer auf, in die ein Filterelement von dem Strömungskanal zuführbar ist, wobei das Verschlusselement der Ausgabekammer über einen Verriegelungsmechanismus in der geschlossenen Position verriegelt ist, wenn die Tür an der Einsteckkammer geöffnet ist, und die Ausgabekammer und die Einsteckkammer mit demselben Strömungskanal verbunden sind. Dadurch kann eine Fehlbedienung beim Auswechseln eines Filterelementes verhindert werden, da sich das Verschlusselement der Ausgabekammer nur dann öffnen lässt, wenn die Tür an der Einsteckkammer geschlossen ist. Daher muss der Benutzer zunächst ein Filterelement in die Einsteckkammer einstecken und das Verschlusselement verschließen, bevor dann das Verschlusselement an der Ausgabekammer geöffnet werden kann. Der Verriegelungsmechanismus ist dabei an dem gleichen Schacht wirksam, an dem die Einsteckkammer, der Strömungskanal und die Ausgabekammer miteinander verbunden sind und einen gemeinsamen Schacht ausbilden. Der Schacht kann dabei bevorzugt vertikal als Fallschacht ausgerichtet sein, aber auch eine Ausrichtung horizontal oder in eine andere Richtung ist möglich. Die Filtervorrichtung kann in Strömungsrichtung mehrere solcher Schächte hintereinander aufweisen.

Zwischen der Einsteckkammer und dem Strömungskanal ist vorzugsweise eine Öffnung ausgebildet, die über eine bewegbare Abdeckung verschließbar ist. Die Öffnung kann durch die Abdeckung freigegeben werden, wenn die Tür an der Einsteckkammer in der geschlossenen Position angeordnet ist. Dies verhindert, dass sowohl die Öffnung als auch die Tür in einer Offenstellung angeordnet sind, was zu einem Ansaugen von Fremdluft an der Filtervorrichtung führt und Auswirkungen auf dem Produktionsprozess hat, insbesondere wenn es sich um einen drucksensitiven Produktionsprozess, beispielsweise bei der Faserherstellung, handelt. Zur Gewährleistung, dass die Tür an der Einsteckkammer und die Öffnung zwischen Einsteckkammer und Strömungskanal nicht gleichzeitig geöffnet sind, kann die Tür zum Öffnen und Schließen der Einsteckkammer zusammen mit der Abdeckung verschiebbar sein. Eine entsprechende Öffnung in der Abdeckung gibt dann die Öffnung zwischen Einstecckammer und Strömungskanal nur dann frei, wenn die verschiebbare Tür in einer Schließposition angeordnet ist.

In einer weiteren Ausgestaltung der Erfindung ist die Abdeckung zusammen mit einem Blockierelement des Verriegelungsmechanismus verschiebbar. Das Blockierelement kann beispielsweise einen Schlitz umfassen, in den ein mit einer drehbaren Achse des drehbaren Verschlusselementes verbundener Steg eingreift, der im Bereich des Schlitzes eine Drehung der Achse blockiert, wobei in dem Schlitz eine Aufweitung vorgesehen ist, an der der Steg der Achse zum Öffnen des Verschlusselementes drehbar ist. Der Steg kann beispielsweise einen rechteckförmigen Querschnitt besitzen, so dass der Steg im Bereich des schmalen Schlitzes nicht drehbar ist, aber im Bereich der Aufweitung eine Drehung ermöglicht. Dadurch kann durch Verschieben des Blockierelementes mit dem Schlitz relativ zu dem Steg an der Achse eine Verriegelung des Verschlusselementes bewirkt oder aufgehoben werden.

Vorzugsweise sind in dem Strömungskanal mindestens zwei hintereinander angeordnete Filterelemente angeordnet, die beispielsweise als Grobfilter und Feinfilter ausgebildet sind. Jedes Filterelement kann eine Filterfläche aufweisen, an der Schwebteile und Partikel aus der Luft herausgefiltert werden, beispielsweise durch Siebe, Gewebe, Drähte oder Vliesmaterialien.

Gemäß einer bevorzugten Ausführungsform weist der Strömungskanal in Strömungsrichtung mindestens zwei hintereinander angeordnete Filterelemente auf, die durch eine unterschiedliche Geometrie codiert sind und jeweils nur in eine von zwei benachbarten Einsteckkammern von zwei oder mehr benachbarten Einsteckkammern einschiebbar sind. Dadurch wird gewährleistet, dass jedem Filterelement durch eine bestimmte Geometrie nur eine Einsteckkammer zugeordnet ist, so dass ein Vertauschen der Filterelemente ausgeschlossen wird. Gerade bei Einsatz unterschiedlicher Filterelemente als Grobfilter oder Feinfilter kann durch die Codierung durch eine Geometrie ein Einschieben eines anderen Filterelementes in eine bestimmte Einsteckkammer verhindert werden. Solche Codierungen können beispielsweise durch unterschiedliche Breiten, unterschiedliche Dicken oder andere geometrische Gestaltungen, wie Abschrägungen, Vorsprünge oder Stifte, ausgebildet sein.

Vorzugsweise ist jede Tür und/oder jedes Verschlusselement über eine umlaufende Dichtung abgedichtet an der Einsteckkammer oder der Ausgabekammer positionierbar. Gerade bei Produktionsanlagen mit drucksensitiven Produktionsprozessen kann somit ein Fremdlufteinzug an der Filtervorrichtung gering gehalten werden.

Vorzugsweise ist an dem Filterelement eine Abdeckung einschiebbar, die einen Filterkuchen an dem Filterelement überdeckt, damit die Einheit aus Filterelement und Abdeckung aus der Ausgabekammer entnehmbar ist. Durch die Abdeckung kann beim Entnahmeprozess das Filterelement verschlossen werden, so dass die abgeschiedenen Partikel, die den Filterkuchen bilden, durch die Abdeckung sicher innerhalb des Filterelementes gehalten werden. Hierfür kann das Filterelement als Filterkassette ausgebildet sein, das einen umlaufenden Rahmen um eine Filterfläche aufweist. Ferner kann optional an der Abdeckung eine Rast- oder Riegelmechanik vorgesehen sein, die an dem Filterelement verrastbar oder verriegelbar ist, beispielsweise über ein Drehteil. dann kann das Filterelement über die Abdeckung aus der Ausgabekammer entnommen werden, wobei die Abdeckung hierfür vorzugsweise ein Griffelement aufweist, so dass der Benutzer das Filterelement nur nach der Anbringung der Abdeckung herausziehen kann.

Die Erfindung wird nachfolgend anhand eines Ausführungsbeispiels mit Bezug auf die beigefügten Zeichnungen näher erläutert. Es zeigen:
- Figur 1: eine schematische Ansicht einer erfindungsgemäßen Filtervorrichtung;
- Figuren 2A bis 2D: mehrere perspektivische Ansichten der Filtervorrichtung in einer Betriebsposition;
- Figuren 3A bis 3D: mehrere Ansichten der Filtervorrichtung der Figur 2, bei der die erste Einsteckkammer geöffnet ist;
- Figuren 4A bis 4D: mehrere Ansichten der Filtervorrichtung der Figur 2, bei der die erste Ausgabekammer geöffnet ist;
- Figuren 5A und 5B: zwei Detailansichten eines Abdeckelementes zwischen Einsteckkammer und Strömungskanal;
- Figur 6: eine Ansicht eines Filterelementes und einer Abdeckung vor der Montage;
- Figuren 7A bis 7C: mehrere Ansichten des Filterelementes der Figur 6 mit montierter Abdeckung, und
- Figur 8: eine Ansicht von zwei unterschiedlichen Filterelementen.

Eine Filtervorrichtung 1 dient zur Filtration eines Luftstromes, beispielsweise in einer Produktionsanlage für Fasern oder Filamente oder zum Reinigen von Verbrennungsabgasen. Die Filtervorrichtung 1 umfasst einen Einlasskanal 2, an dem die zu reinigende Luft einströmt und einen Auslasskanal 3, aus dem die gereinigte Luft ausströmt. Zwischen dem Einlasskanal 2 und dem Auslasskanal 3 sind eine oder mehrere Kammern in einem Strömungskanal 4 angeordnet, in denen ein Filterelement 8 oder 8' positionierbar ist.

Um das im Strömungskanal 4 angeordnete Filterelement im laufenden Betrieb wechseln zu können, ist benachbart zu dem Strömungskanal 4 eine Einstecckammer 5 und ein Auslasskammer 6 vorgesehen. Dabei ist der Einlasskanal 2 mit einer Kammer im dem Strömungskanal 4 verbunden, die wiederum mit dem Auslasskanal 3 verbunden ist. Ein solcher Schacht kann ein oder im Strömungsrichtung gesehen mehrere Male hintereinander angeordnet sein, beispielsweise um ein Filterelement 8 als Grobfilter und ein Filterelement 8' als Feinfilter einzusetzen. Das Auswechseln der gebrauchten Filterelemente 8 oder 8' erfolgt jedoch auf die gleiche Weise.

Im Betrieb wird ein Filterelement 8 oder 8' in dem Strömungskanal 4 angeordnet und ist durch einen Anschlag oder ein Filterelement 8 oder 8' in der Ausgabekammer 6 abgestützt. Zum Einlegen eines neuen Filterelementes 8 oder 8' wird dieses in die zugehörige Einsteckkammer 5 eingesteckt, die dann verschlossen wird. Anschließend wird an der Ausgabekammer 6 ein Filterelement 8 oder 8' entnommen, so dass entweder sofort oder nach Schließen eines Verschlusselementes an der Ausgabekammer 6 das in dem Strömungskanal 4 angeordnete Filterelement 8 oder 8' in die Ausgabekammer 6 verschoben wird, wahlweise über ein Federelement oder die Schwerkraft. Dann kann das in der Einsteckkammer 5 angeordnete Filterelement 8 oder 8' in dem Strömungskanal 4 nachrutschen, wahlweise durch die Schwerkraft oder ein Federelement. Hierfür können entsprechende Führungsmittel, wie Wände oder Führungsleisten vorgesehen sein.

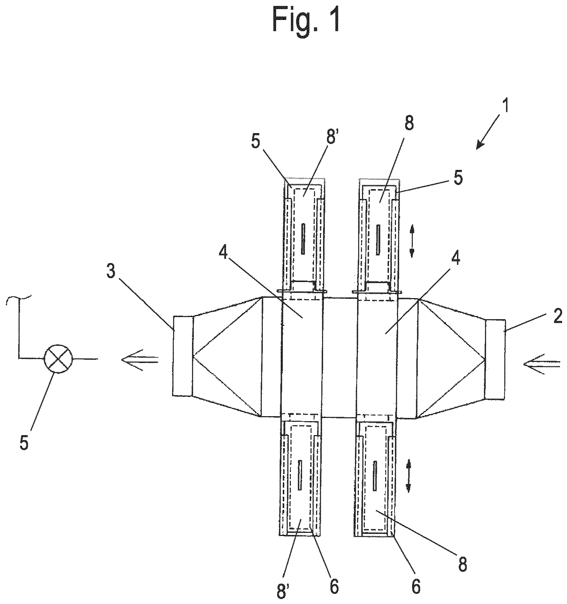

Das in Figur 1 nur schematisch dargestellte Prinzip der Filtervorrichtung wird nun im Detail beschrieben:

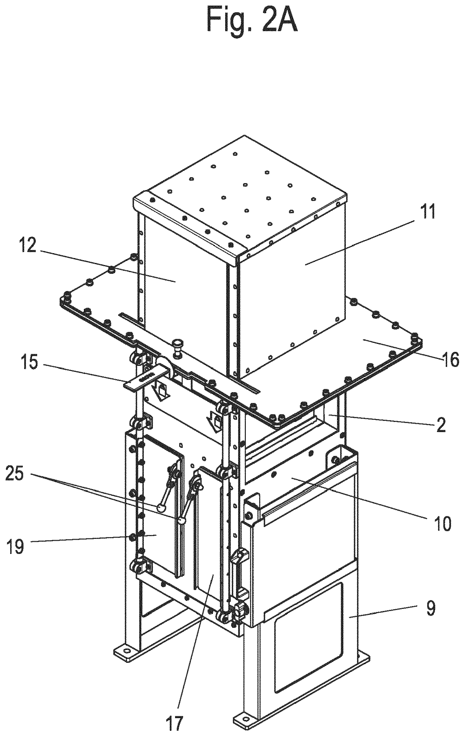

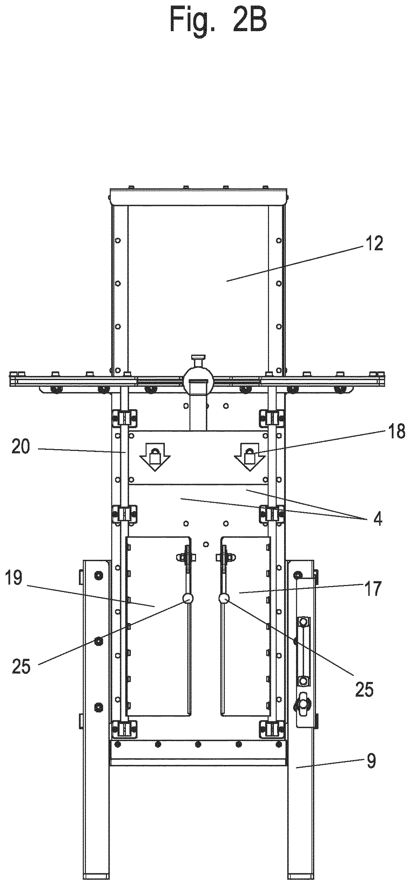

In den Figuren 2A und 2B ist die Filtervorrichtung 1 gezeigt, die ein Gestell 9 aufweist, an dem ein Gehäuse 10 gehalten ist. Das Gehäuse 10 ist in einem mittleren Bereich als Strömungskanal ausgebildet, das auf einer Seite an einen Einlasskanal 2 und auf der gegenüberliegenden Seite an einen Auslasskanal 3 angeschlossen ist. Zwischen dem Einlasskanal 2 und dem Auslasskanal 3 sind an dem Strömungskanal 4 zwei Kammern ausgebildet, an denen jeweils ein Filterelement 8 oder 8' positionierbar ist.

Das Gehäuse 10 weist im oberen Bereich eine Haube 11 auf, an der zwei Einsteckkammern 5 für ein Filterelement 8 bzw. 8' ausgebildet sind. Jede Einsteckkammer 5 ist über eine Tür 12 verschließbar, die als Schiebetür ausgebildet ist und über ein Griffelement 15 verschoben werden kann. In den Figuren 2A und 2B sind beide Öffnungen zu den Einsteckkammern 5 verschlossen.

Unterhalb des Strömungskanals 4 sind zwei Ausgabekammern 6 angeordnet, wobei eine Ausgabekammer 6 über ein Verschlusselement 17 und eine weitere Ausgabekammer über ein Verschlusselement 19 verschließbar sind. Das Verschlusselement 17 ist an einer Achse 18 drehbar gelagert, und das Verschlusselement 19 um eine Achse 20. Die Verschlusselemente 17 und 19 sind jeweils über einen Betätigungshebel 25 in der geschlossenen Position verriegelbar.

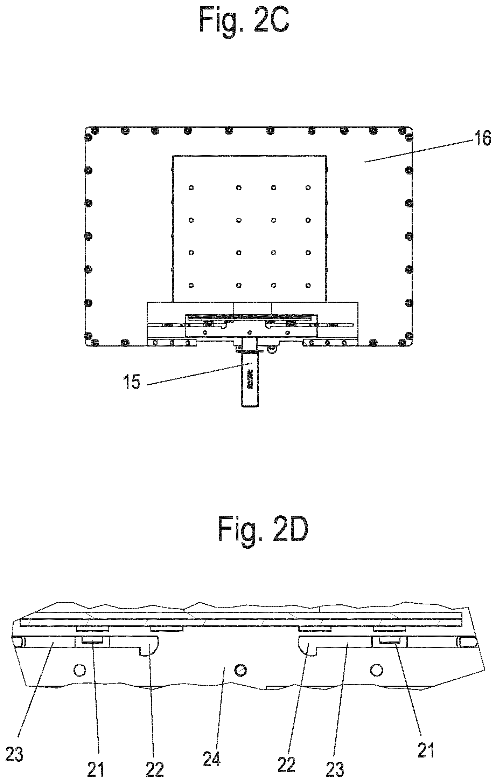

In der Betriebsposition sind die beiden Verschlusselemente 17 und 19 der Ausgabekammern 6 gegen ein Öffnen verriegelt. Hierfür ist ein Blockierelement vorgesehen, das zusammen mit der Tür verschiebbar ist. Wie aus der Draufsicht der Figur 2C und der vergrößerten Ansicht der Figur 2D erkennbar ist, umfasst das Blockierelement einen Schlitz 23, an dem endseitig eine Aufweitung 22 ausgebildet ist. In den Schlitz 23 greift ein Steg 21 ein, der im Querschnitt rechteckförmig ausgebildet ist und durch die Wände an dem Schlitz gegen eine Drehbewegung blockiert wird. Der Steg 21 ist dabei drehfest mit der Achse 18 verbunden oder integral mit dieser ausgebildet. Der Steg 21 auf der linken Seite in Figur 2D ist drehfest mit der Achse 20 verbunden oder integral mit dieser ausgebildet. Durch die Blockierung einer Drehbewegung der Stege 21 wird somit eine Schwenkbewegung der Verschlusselemente 17 und 19 verhindert. In dieser Mittelposition der Tür 12 wird somit ein versehentliches Öffnen der Verschlusselemente 17 und 19 verhindert, da bei einem Auswechselvorgang zunächst ein neues Filterelement 8 oder 8' in eine Einsteckkammer 5 eingeschoben werden muss.

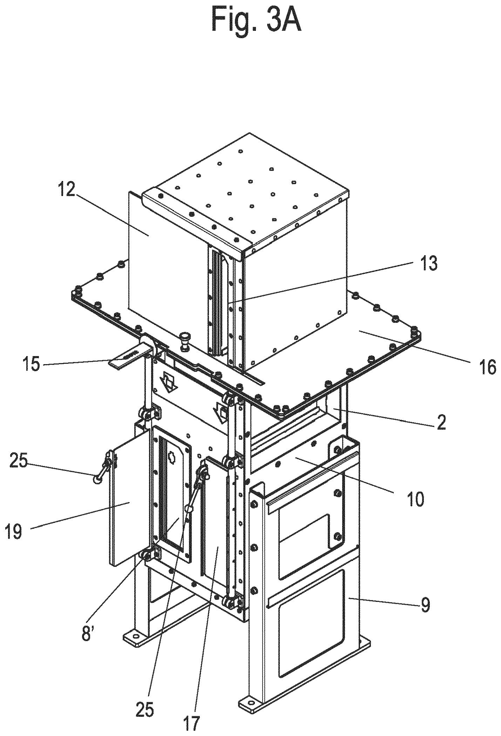

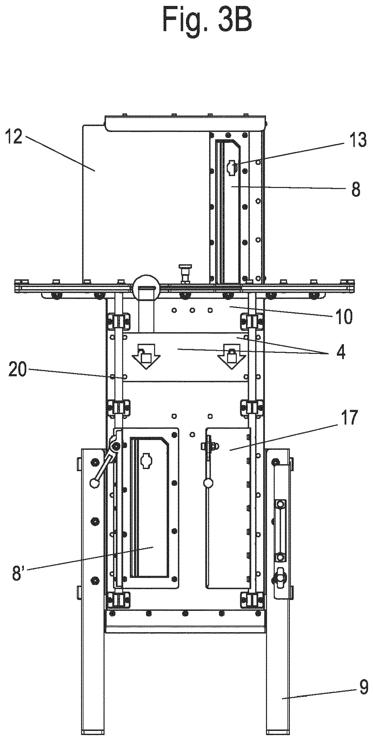

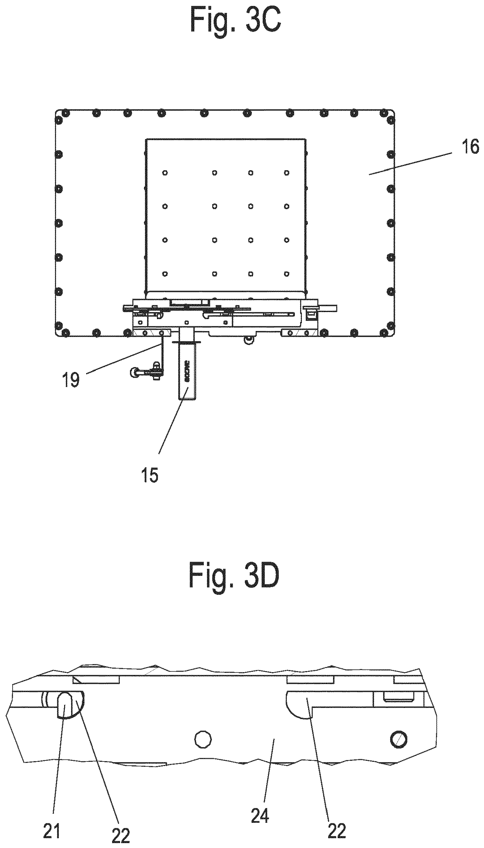

In den Figuren 3A und 3B ist die Filtervorrichtung 1 in einer Position gezeigt, in der die Tür 12 verschoben wurde, um eine Öffnung 13 für die Einsteckkammer 5 auf der rechten Seite zu öffnen. Das Verschieben der Tür 12 erfolgt über das Griffelement 15, mit dem gleichzeitig auch das Blockierelement verschoben wird. Wenn die Einsteckkammer 5 auf der rechten Seite geöffnet ist, kann ein Filterelement 8 eingeschoben werden, wobei die Geometrie der Einsteckkammer 5 auf der rechten Seite so gestaltet ist, dass nur ein bestimmtes Filterelement 8 eingesteckt werden kann, beispielsweise alle Filterelemente 8 gleicher Geometrie, die dann jeweils einen Grobfilter ausbilden.

In dieser Position der Tür 12 kann zudem das Verschlusselement 19 auf der linken Seite geöffnet werden. Dies liegt darin begründet, dass das Blockierelement mit einer Platte 24 verschoben wurde, so dass der Steg 21 an der Achse 20 nun nicht mehr im Bereich des Schlitzes 23 angeordnet ist, sondern im Bereich der Aufweitung 22. Die Aufweitung 22 besitzt eine größere Breite in Längsrichtung des Schlitzes 23 als der Schlitz 23, so dass der Steg 21 zusammen mit der Achse 20 gedreht werden kann, um das Verschlusselement 19 zu öffnen. In dieser Position kann optional das Filterelement 8' in der Ausgabekammer 6 herausgezogen werden.

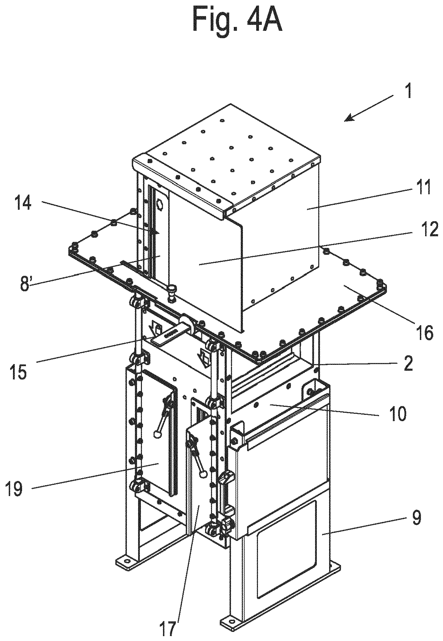

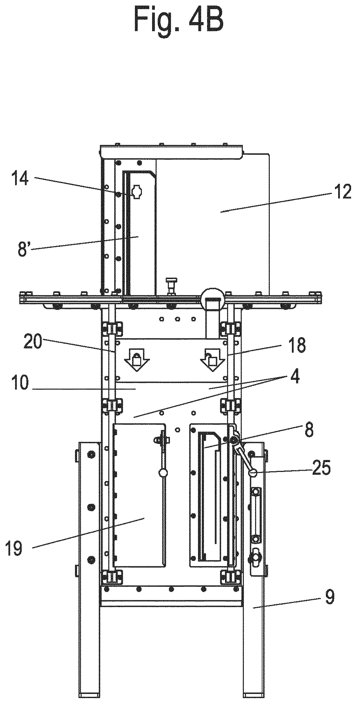

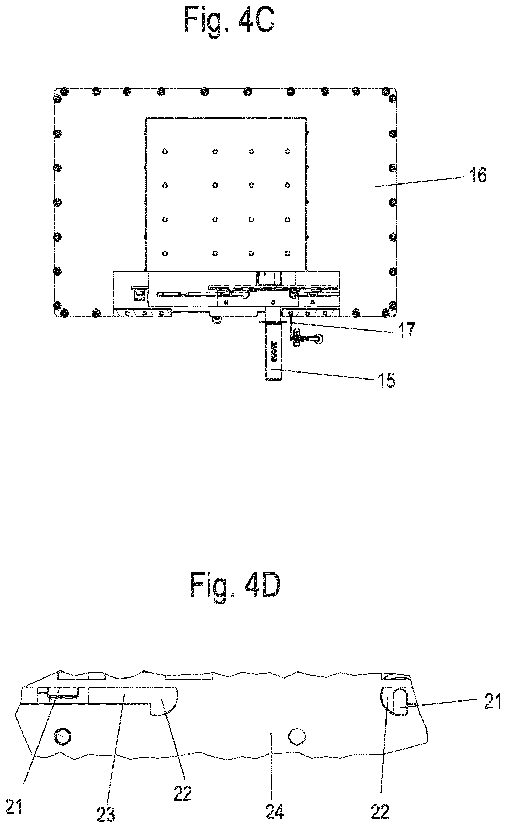

Falls bei dem Filterwechsel zunächst das Filterelement 8 in dem Strömungskanal 4 ausgewechselt werden soll, wird nach dem Einstecken des Filterelementes 8 in die Einsteckkammer 5 die Tür 12 verschlossen und in die in den Figuren 4A und 4B dargestellte Position bewegt. Die Tür 12 verschließt die Öffnung 13 zu der Einsteckkammer 5 auf der rechten Seite, gibt aber eine Öffnung 14 zu der Einsteckkammer 5 auf der linken Seite für ein Filterelement 8' frei. Durch die Bewegung der Tür 12 in die rechte Endposition wurde auch das Blockierelement verschoben, so dass nun der Steg 21, der an der Achse 18 verbunden oder integral ausgebildet ist, in der Aufweitung 22 angeordnet ist, so dass nun das Verschlusselement 17 um die Achse 18 verschwenkt werden kann. In dieser Position kann nun ein Filterelement 8 aus der Ausgabekammer 6 entnommen werden. Durch die Entnahme des in der Ausgabekammer 6 angeordneten Filterelementes 8 kann nun das im Strömungskanal 4 angeordnete, zu wechselnde Filterelement 8 nach unten rutschen, so dass dadurch das Filterelement 8 in der Einsteckkammer 5 in den Strömungskanal 4 nach unten rutschen kann. In der Praxis ist es häufig so, dass das im Strömungskanal 4 befindliche Filterelement 8 durch den zu reinigenden Luftstrom gegen einen Anschlag gedrückt wird, insbesondere wenn Fremdluft durch die geöffnete Ausgabekammer 6 eingesaugt wird. Dann erfolgt ein Verschieben des Filterelementes 8 in dem Strömungskanal und dem Filterelement 8 in der Einsteckkammer 5 erst bei Schließen des Verschlusselementes 17, so dass sich ein Unterdruck in der Ausgabekammer 6 aufbaut, der für ein Ablösen des Filterelementes 8 in dem Strömungskanal 4 sorgt. Optional kann auch über mechanische Mittel ein Verschieben der Filterelemente 8 unterstützt oder angeregt werden.

Nachdem das Filterelement 8 als Grobfilter in dem Strömungskanal 4 gewechselt wurde, kann nun ein Wechsel des Filterelementes 8' als Feinfilter vorgenommen werden, wobei hierfür zunächst ein gereinigtes Filterelement 8' in die Einsteckkammer 5 eingeschoben wird, wenn die Tür 12 in der rechten Endposition gemäß Figur 4B angeordnet ist. Anschließend kann die Tür 12 in die linke Endposition bewegt werden, die in Figur 3B gezeigt ist. In dieser Position ist die linke Einsteckkammer 5 verschlossen und ein Durchgang von der Einstecckammer 5 zu dem Strömungskanal 4 geöffnet. Zudem ist das Verschlusselement 19 zu öffnen, um das Filterelement 8' aus der Ausgabekammer 6 zu entnehmen.

Zur Entnahme der Filterelemente 8 und 8' kann eine Abdeckung 32 in die jeweiligen Filterelement 8 oder 8' eingesteckt werden, die an dem Gestell 9 gelagert werden kann.

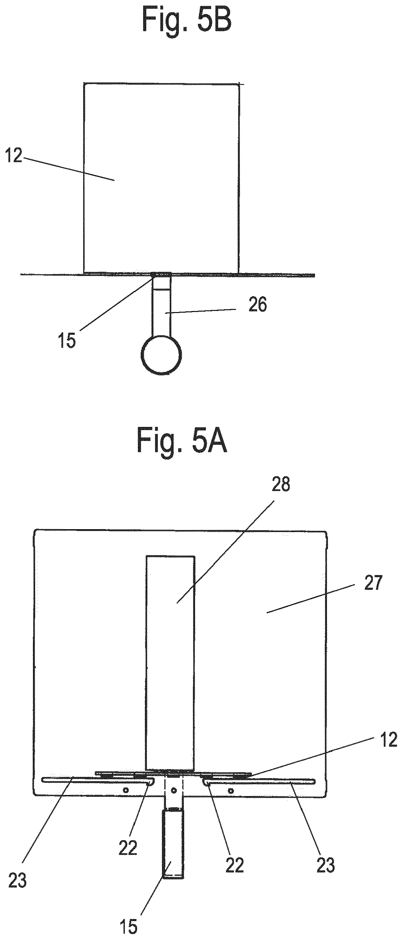

In den Figuren 5A und 5B ist die Tür 12 gezeigt, die zusammen mit einer Abdeckung 27 bewegbar ist. Die Abdeckung 27 weist eine Öffnung 28 auf und kann somit einen Durchgang zwischen einer Einsteckkammer 5 und dem Strömungskanal 4 wahlweise öffnen oder schließen. Die Breite der Öffnung 28 ist so breit ausgebildet, dass alle Filterelemente 8 oder 8' durch die Öffnung 28 hindurchgleiten können. An der Abdeckung 27 ist ein vorderer Bereich auch als Blockierelement ausgebildet, in dem die Schlitze 23 mit der endseitigen Aufweitung 22 ausgespart sind. Dadurch kann mit der Bewegung der Tür 12 über das Griffelement 15 gleichzeitig ein Blockieren der Verschlusselemente 17 und 19 erfolgen, und zudem lässt sich eine Verbindung zwischen einer Einsteckkammer 5 und dem Strömungskanal 4 öffnen und schließen.

Durch die Gestaltung der Tür 12 und der Abdeckung 27 wird bei einem Wechsel eines Filterelementes 8 erreicht, dass die Einsteckkammer 5 zu dem Strömungskanal 4 hin immer geschlossen ist. Wenn die Einsteckkammer an einer frontseitigen Öffnung 13 geöffnet wird, wie dies in Figur 3B gezeigt ist, überdeckt die Abdeckung 27 die Öffnung zu dem Strömungskanal 4, so dass nur ein geringer Anteil an Fremdluft eingesaugt werden kann. Wenn das neue Filterelement 8 in die Einsteckkammer 5 eingefügt ist, kann die Tür 12 in die in Figur 4B gezeigte Position verschwenkt werden, wodurch die Öffnung zwischen der Einsteckkammer 5 und dem Strömungskanal 4 freigegeben wird, da sich dann die Öffnung 28 unter der Einsteckkammer 5 befindet. Der Strömungskanal 4 ist jedoch nach außen abgedichtet, da die Tür 12 geschlossen ist. In dieser Position kann dann das Verschlusselement 17 geöffnet werden, um das Filterelement 8 aus der Ausgabekammer zu entnehmen. Ein Spalt zwischen dem Filterelement 8 in dem Strömungskanal 4 und der Ausgabekammer 6 kann so gering bemessen werden, dass bei der Entnahme des Filterelementes 8 nur geringfügig Fremdluft eingesaugt wird, was jedoch zu vernachlässigbaren Druckschwankungen führt und den Produktionsprozess nicht beeinträchtigt.

Ferner ist an dem Griffelement 15 ein Vorsprung als Markierungselement 26 ausgebildet, so dass der Benutzer leichter sieht, ob die Tür in einer mittleren Schließposition oder in einer der beiden seitlichen Öffnungspositionen angeordnet ist. Ferner können Markierungen zur Kennzeichnung der einzelnen Schritte zum Wechseln der Filterelemente 8, 8' vorgesehen sein.

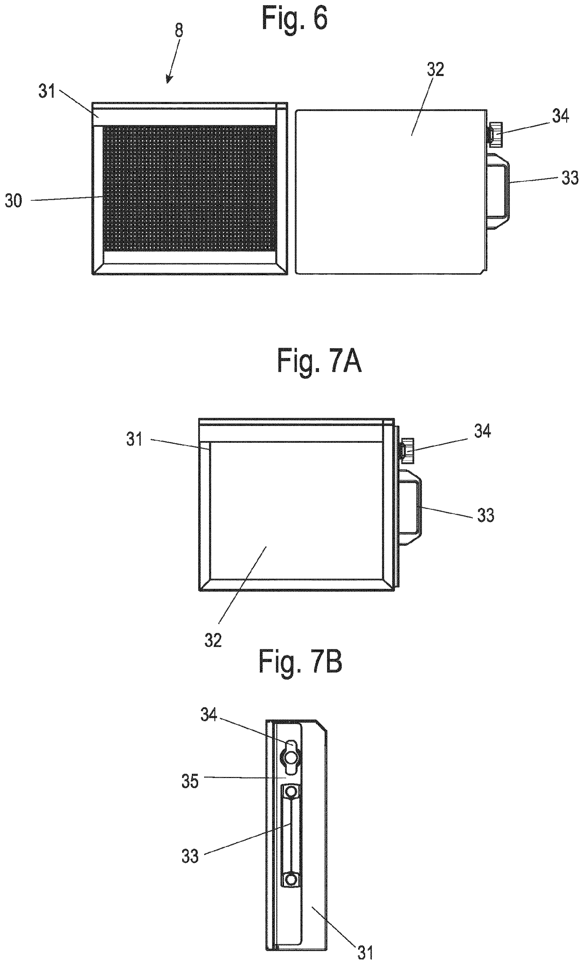

In Figur 6 ist ein Filterelement 8 gezeigt, das eine Filterfläche 30 aufweist, beispielsweise ein Sieb, ein Gewebe, ein Lochgitter oder ein Vliesmaterial, wobei die Filterfläche 30 von einem Rahmen 31 umgeben ist. An dem Rahmen 31 sind Führungsmittel, beispielsweise Nuten, ausgebildet, um die Filterfläche 30 abdecken zu können. Hierbei kann ein Filterkuchen, der sich auf der Filterfläche 30 abgelagert hat, durch die Abdeckung 32 überdeckt werden, so dass bei Entnahme des Filterelementes 8 aus der Ausgabekammer 6 nach Möglichkeit keine Partikel durch die Fremdluft angesaugt werden, die dann in den Strömungskanal 4 gelangt.

Um zu verhindern, dass ein Benutzer das Filterelement 8 manuell ohne die Abdeckung 32 aus der Ausgabekammer 6 entnimmt, ist an der Abdeckung 32 ein Drehteil 34 einer Rast- oder Riegelmechanik vorgesehen. Nach dem Einschieben der Abdeckung 32 auf das Filterelement 8 kann über das Drehteil 34 die Abdeckung 32 an dem Filterelement 8 verriegelt oder verrastet werden, um danach durch ein Griffelement 33 an der Abdeckung 32 die Einheit aus Filterelement 8 und Abdeckung 32 aus der Ausgabekammer 6 herauszuziehen. Das Drehteil 34 kann beispielsweise als Bajonettverschluss ausgebildet sein, der in einer ersten Position in eine Öffnung an dem Filterelement 8 einsteckbar ist und dann durch Drehen um 90° eine Verriegelung bewirkt.

In den Figuren 7A und 7B ist die Abdeckung 32 an dem Filterelement 8 angeordnet, und es ist erkennbar, dass die Abdeckung 32 randseitig von dem Rahmen 31 umgeben ist. Dadurch ist das Filterelement 8 weitgehend abgedichtet. Die Abdeckung 32 ist plattenförmig ausgebildet und kann aus einem Metallblech oder Kunststoff ausgebildet sein, beispielsweise einem transparenten Kunststoff, so dass der innere Bereich des Filterelementes 8 sichtbar bleibt.

Die Abdeckung 32 umfasst eine Abwinklung 35, an der das Drehteil 34 drehbar gelagert ist und an der das Griffelement 33 fixiert ist. Die Abdeckung 32 kann dabei ein- oder mehrteilig ausgebildet sein.

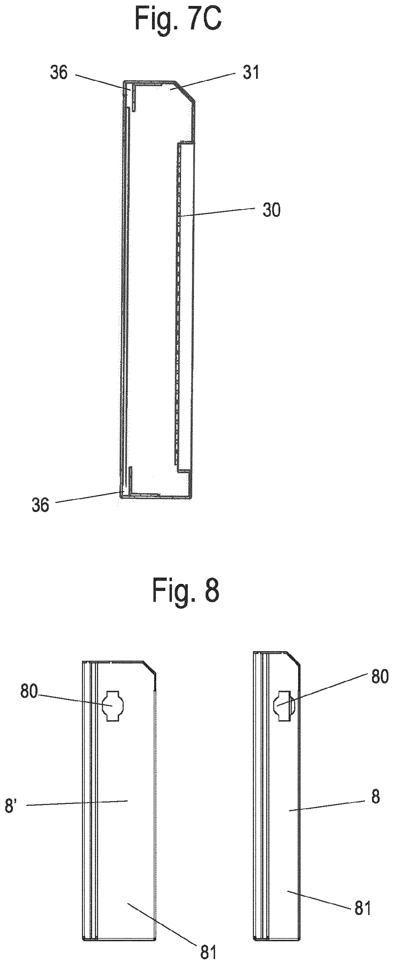

In Figur 7C ist ein Schnitt durch das Filterelement 8 gezeigt, und es ist erkennbar, dass an gegenüberliegenden Seiten eine Nut 36 ausgebildet ist, in die ein Rand der plattenförmigen Abdeckung 32 einschiebbar ist. An der Stirnseite kann dann die Abdeckung 32 über das Drehteil 34 mit dem Rahmen 31 verriegelt werden.

In Figur 8 sind zwei unterschiedliche Filterelemente 8 und 8' gezeigt, die eine unterschiedliche Dicke aufweisen und optional auch in der Höhe unterschiedlich ausgebildet sein können. Dadurch ist sichergestellt, dass nur ein Filterelement 8 eines vorbestimmten Typs jeweils in eine einzige Öffnung der Einstecckammer 5 eingefügt werden kann, so dass eine Fehlbedienung durch die Geometrie der Filterelemente 8 und 8' sicher verhindert wird. Jedes Filterelement 8 umfasst an dem Rahmen 31 eine Öffnung 80, die mit dem Drehteil 34 an der Abdeckung 32 in Eingriff gebracht werden kann. Optional können auch andere Verriegelungsmechaniken oder Rastmechaniken eingesetzt werden, um eine lösbare Verbindung zwischen der Abdeckung 32 und einem Filterelement 8 oder 8' herzustellen.

In dem dargestellten Ausführungsbeispiel weist die Filtervorrichtung 1 zwei in Strömungsrichtung hintereinander angeordnete Schächte auf, wobei jeder Schacht eine Einsteckkammer 5, eine Kammer in dem Strömungskanal 4 und eine Ausgabekammer 6 aufweist. An jedem Schacht können Führungsmittel für die Filterelemente 8, 8' vorgesehen sein.

Es ist natürlich möglich, statt zwei Schächten nur einen Schacht oder mehr als zwei Schächte an einer Filtervorrichtung 1 vorzusehen. In dem dargestellten Ausführungsbeispiel ist die Tür 12 verschiebbar ausgebildet, während die Verschlusselemente 17 und 19 verschwenkbar gelagert sind. Es ist natürlich auch möglich, die Tür 12 ebenfalls verschwenkbar auszubilden, insbesondere kann statt der einteiligen Tür eine mehrteilige Tür mit verschiedenen Flügeln vorgesehen sein. Zudem können auch die Verschlusselemente 17 und 19 statt verschwenkbar auch verschiebbar ausgebildet werden.

### Bezugszeichenliste

- 1: Filtervorrichtung
- 2: Einlasskanal
- 3: Auslasskanal
- 4: Strömungskanal
- 5: Einsteckkammer
- 6: Ausgabekammer
- 8, 8': Filterelement
- 9: Gestell
- 10: Gehäuse
- 11: Haube
- 12: Tür
- 13: Öffnung
- 14: Öffnung
- 15: Griffelement
- 17: Verschlusselement
- 18: Achse
- 19: Verschlusselement
- 20: Achse
- 21: Steg
- 22: Aufweitung
- 23: Schlitz
- 24: Platte
- 25: Betätigungshebel
- 26: Markierungselement
- 27: Abdeckung
- 28: Öffnung
- 30: Filterfläche
- 31: Rahmen
- 32: Abdeckung
- 33: Griffelement
- 34: Drehteil
- 35: Abwinklung
- 36: Nut
- 80: Öffnung

## Patentansprüche

1. Filtervorrichtung (1) zum Filtern von Partikeln aus einem Luftstrom mit einem Einlasskanal (2), durch den die zu reinigende Luft strömt, mindestens einem durchströmbaren Filterelement (8, 8'), das auswechselbar in einem Strömungskanal (4) gehalten ist, und einem Auslasskanal (3), durch den die gereinigte Luft strömt, wobei die Filtervorrichtung (1) eine durch eine Tür (12) verschließbare Einsteckkammer (5), von der ein Filterelement (8, 8') zu dem Strömungskanal (4) zuführbar ist, und eine durch ein Verschlusselement (17, 19) verschließbare Ausgabekammer (6) aufweist, in die ein Filterelement (8, 8') von dem Strömungskanal (4) zuführbar ist, wobei das Verschlusselement (17, 19) der Ausgabekammer (6) über einen Verriegelungsmechanismus in der geschlossenen Position verriegelt ist, wenn die Tür an der Einsteckkammer (5) geöffnet ist und die Ausgabekammer (6) und die Einsteckkammer (5) mit demselben Strömungskanal (4) verbunden ist, **dadurch gekennzeichnet, dass** sich das Verschlusselement (17, 19) der Ausgabekammer (6) nur dann öffnen lässt, wenn die Tür (12) an der Einsteckkammer (5) geschlossen ist.

2. Filtervorrichtung nach Anspruch 1, **dadurch gekennzeichnet, dass** zwischen der Einsteckkammer (5) und dem Strömungskanal (4) eine Öffnung ausgebildet ist, die über eine bewegbare Abdeckung (27) verschließbar ist.

3. Filtervorrichtung nach Anspruch 2, **dadurch gekennzeichnet, dass** die Öffnung durch die Abdeckung (27) dann freigebbar ist, wenn sich die Tür (12) an der Einsteckkammer (5) in der geschlossenen Position befindet.

4. Filtervorrichtung nach Anspruch 2 oder 3, **dadurch gekennzeichnet, dass** die Tür (12) zum Öffnen und Verschließen der Einsteckkammer (5) zusammen mit der Abdeckung (27) verschließbar ist.

5. Filtervorrichtung nach einem der vorhergehenden Ansprüche, **dadurch gekennzeichnet, dass** die Abdeckung (27) zusammen mit einem Blockierelement des Verriegelungsmechanismus verschiebbar ist.

6. Filtervorrichtung nach Anspruch 5, **dadurch gekennzeichnet, dass** das Blockierelement einen Schlitz (23) umfasst, in den ein mit einer drehbaren Achse (18, 20) des drehbaren Verschlusselementes (17, 19) verbundener Steg (21) eingreift, der im Bereich des Schlitzes (23) eine Drehung der Achse (18, 20) blockiert, wobei an dem Schlitz (23) eine Aufweitung (22) vorgesehen ist, an der der Steg (21) der Achse (18, 20) zum Öffnen des Verschlusselementes (17, 19) drehbar ist.

7. Filtervorrichtung nach einem der vorhergehenden Ansprüche, **dadurch gekennzeichnet, dass** in dem Strömungskanal (4) mindestens zwei in Strömungsrichtung hintereinander angeordnete Filterelemente (8, 8') angeordnet sind.

8. Filtervorrichtung nach einem der vorhergehenden Ansprüche, **dadurch gekennzeichnet, dass** in dem Strömungskanal (4) mindestens zwei in Strömungsrichtung hintereinander angeordnete Filterelemente (8, 8') angeordnet sind und die Filterelemente (8, 8') durch eine unterschiedliche Geometrie codiert sind und jeweils nur in eine von zwei benachbarten Einsteckkammern (5) einschiebbar sind.

9. Filtervorrichtung nach einem der vorhergehenden Ansprüche, **dadurch gekennzeichnet, dass** die Tür (12) und/oder das Verschlusselement (17, 19) über eine umlaufende Dichtung abgedichtet an der Einsteckkammer (5) oder der Ausgabekammer (6) positionierbar ist oder sind.

10. Filtervorrichtung nach einem der vorhergehenden Ansprüche, **dadurch gekennzeichnet, dass** an dem Filterelement (8, 8') eine Abdeckung (32) einschiebbar ist, die einen Filterkuchen an dem Filterelement (8, 8') überdeckt, damit die Einheit aus Filterelement (8, 8') und Abdeckung (32) aus der Ausgabekammer (6) entnehmbar ist.

11. Filtervorrichtung nach Anspruch 10, **dadurch gekennzeichnet, dass** das Filterelement als Filterkassette ausgebildet ist, die einen umlaufenden Rahmen (31) um eine Filterfläche (30) aufweist.

12. Filtervorrichtung nach Anspruch 10 oder 11, **dadurch gekennzeichnet, dass** an der Abdeckung (32) eine Rast- oder Riegelmechanik ausgebildet ist, die an dem Filterelement (8, 8') verrastbar oder verriegelbar ist, um die Filterkassette (8, 8') über ein an der Abdeckung (32) angeordnetes Griffelement (33) die Einheit aus Filterelement (8, 8') und Abdeckung (32) zu entnehmen.

## Claims

1. Filter device (1) for filtering particles from an air stream, having an inlet channel (2) through which the air to be purified flows, at least one filter element (8, 8') through which a flow can pass and which is held replaceably in a flow channel (4), and an outlet channel (3) through which the purified air flows, wherein the filter device (1) has an insertion chamber (5) which can be closed by a door (12) and from which a filter element (8, 8') can be fed to the flow channel (4), and an output chamber (6) which can be closed by a closure element (17, 19) and into which a filter element (8, 8') can be fed from the flow channel (4), wherein the closure element (17, 19) of the output chamber (6) is locked in the closed position via a locking mechanism when the door on the insertion chamber (5) is open and the output chamber (6) and the insertion chamber (5) are connected to the same flow channel (4), **characterized in that** the closure element (17, 19) of the output chamber (6) can be opened only when the door (12) of the insertion chamber (5) is closed.

2. Filter device according to claim 1, **characterized in that** an opening is formed between the insertion chamber (5) and the flow channel (4), which opening can be closed via a movable cover (27).

3. Filter device according to claim 2, **characterized in that** the opening through the cover (27) is releasable when the door (12) on the insertion chamber (5) is in the closed position.

4. Filter device according to claim 2 or 3, **characterized in that** the door (12) for opening and closing the insertion chamber (5) can be closed together with the cover (27).

5. Filter device according to one of the preceding claims, **characterized in that** the cover (27) is displaceable together with a blocking element of the locking mechanism.

6. Filter device according to claim 5, **characterized in that** the blocking element comprises a slot (23), into which a web (21) connected to a rotatable axle (18, 20) of the rotatable closure element (17, 19) engages, which blocks a rotation of the axle (18, 20) in the region of the slot (23), wherein a widened portion (22) is provided on the slot (23), on which the web (21) of the axle (18, 20) is rotatable for opening the closure element (17, 19).

7. Filter device according to one of the preceding claims, **characterized in that** at least two filter elements (8, 8') arranged one behind the other in the flow direction are arranged in the flow channel (4).

8. Filter device according to one of the preceding claims, **characterized in that** at least two filter elements (8, 8') arranged one behind the other in the direction of flow are arranged in the flow channel (4), and the filter elements (8, 8') are coded by a different geometry and in each case are insertable only into one of two adjacent insertion chambers (5).

9. Filter device according to one of the preceding claims, **characterized in that** the door (12) and/or the closure element (17, 19) is or are sealably positionable on the insertion chamber (5) or the output chamber (6) via a circumferential seal.

10. Filter device according to one of the preceding claims, **characterized in that** a cover (32) is insertable on the filter element (8, 8') and covers a filter cake on the filter element (8, 8') so that the unit of filter element (8, 8') and cover (32) is removable from the output chamber (6).

11. Filter device according to claim 10, **characterized in that** the filter element is formed as a filter cartridge having a circumferential frame (31) around a filter surface (30).

12. Filter device according to claim 10 or 11, **characterized in that** a latching or locking mechanism is formed on the cover (32), which latching or locking mechanism can be latched or locked to the filter element (8, 8') in order to remove the filter cartridge (8, 8') via a handle element (33) arranged on the cover (32) as a unit consisting of the filter element (8, 8') and the cover (32).

## Revendications

1. Dispositif de filtration (1) pour filtrer des particules d'un flux d'air, comprenant un canal d'entrée (2) à travers lequel s'écoule l'air à purifier, au moins un élément filtrant (8, 8') pouvant être traversé par le flux, qui est maintenu de manière interchangeable dans un canal d'écoulement (4), et un canal de sortie (3), à travers lequel l'air purifié s'écoule, le dispositif de filtration (1) présentant une chambre d'insertion (5) pouvant être fermée par une porte (12), à partir de laquelle chambre d'insertion un élément filtrant (8, 8') peut être amené au canal d'écoulement (4), et une chambre de distribution (6) pouvant être fermée par un élément de fermeture (17, 19), dans laquelle chambre de distribution un élément filtrant (8, 8') peut être amené depuis le canal d'écoulement (4), l'élément de fermeture (17, 19) de la chambre de distribution (6) étant verrouillé dans la position fermée par un mécanisme de verrouillage, lorsque la porte sur la chambre d'insertion (5) est ouverte et que la chambre de distribution (6) et la chambre d'insertion (5) sont reliées au même canal d'écoulement (4), **caractérisé en ce que** l'élément de fermeture (17, 19) de la chambre de distribution (6) ne peut être ouvert que lorsque la porte (12) sur la chambre d'insertion (5) est fermée.

2. Dispositif de filtration selon la revendication 1, **caractérisé en ce qu'**une ouverture est formée entre la chambre d'insertion (5) et le canal d'écoulement (4), laquelle peut être fermée par un couvercle mobile (27).

3. Dispositif de filtration selon la revendication 2, **caractérisé en ce que** l'ouverture peut être libérée par le couvercle (27) lorsque la porte (12) sur la chambre d'insertion (5) est dans la position fermée.

4. Dispositif de filtration selon la revendication 2 ou 3, **caractérisé en ce que** la porte (12) pour l'ouverture et la fermeture de la chambre d'insertion (5) peut être fermée avec le couvercle (27).

5. Dispositif de filtration selon l'une des revendications précédentes, **caractérisé en ce que** le couvercle (27) peut coulisser avec un élément de blocage du mécanisme de verrouillage.

6. Dispositif de filtration selon la revendication 5, **caractérisé en ce que** l'élément de blocage comprend une fente (23) dans laquelle s'engage une nervure (21) reliée à un axe rotatif (18, 20) de l'élément de fermeture rotatif (17, 19), qui bloque une rotation de l'axe (18, 20) dans la zone de la fente (23), un élargissement (22) étant prévu sur la fente (23), sur lequel la tige (21) de l'axe (18, 20) peut tourner pour ouvrir l'élément de fermeture (17, 19).

7. Dispositif de filtration selon l'une des revendications précédentes, **caractérisé en ce qu'**au moins deux éléments filtrants (8, 8') disposés l'un derrière l'autre dans le sens d'écoulement sont disposés dans le canal d'écoulement (4).

8. Dispositif de filtration selon l'une des revendications précédentes, **caractérisé en ce qu'**au moins deux éléments filtrants (8, 8') disposés l'un derrière l'autre dans la direction d'écoulement sont disposés dans le canal d'écoulement (4) et les éléments filtrants (8, 8') sont codés par une géométrie différente et ne peuvent être insérés respectivement que dans l'une de deux chambres d'insertion (5) voisines.

9. Dispositif de filtration selon l'une des revendications précédentes, **caractérisé en ce que** la porte (12) et/ou l'élément de fermeture (17, 19) peut ou peuvent être positionnés de manière étanche sur la chambre d'insertion (5) ou la chambre de distribution (6) par un joint périphérique étanche.

10. Dispositif de filtration selon l'une des revendications précédentes, **caractérisé en ce qu'**un couvercle (32) peut être inséré sur l'élément filtrant (8, 8') et recouvre un gâteau de filtration sur l'élément filtrant (8, 8') afin que l'ensemble formé par l'élément filtrant (8, 8') et le couvercle (32) puisse être retiré de la chambre de distribution (6).

11. Dispositif de filtration selon la revendication 10, **caractérisé en ce que** l'élément filtrant est réalisé sous la forme d'une cassette de filtre qui présente un cadre périphérique (31) autour d'une surface filtrante (30).

12. Dispositif de filtration selon la revendication 10 ou 11, **caractérisé en ce qu'**un mécanisme d'encliquetage ou de verrouillage est formé sur le couvercle (32), lequel peut être encliqueté ou verrouillé sur l'élément filtrant (8, 8') afin de retirer la cassette de filtre (8, 8') via un élément de préhension (33) disposé sur le couvercle (32), l'ensemble formé par l'élément filtrant (8, 8') et le couvercle (32).
